# EUROPÄISCHE PATENTSCHRIFT

(11) **EP 3 930 441 B1**
(45) Veröffentlichungstag und Bekanntmachung des Hinweises auf die Patenterteilung: **09.08.2023**
(21) Anmeldenummer: 20708063.1
(22) Anmeldetag: 26.02.2020
(51) Int. Cl.: A01B 59/043, H01Q 1/12, H01Q 1/24, H01Q 1/32

(54) **MOBILE KOMMUNIKATIONSSTATION INSBESONDERE FÜR LAND-, BAU- UND FORSTWIRTSCHAFTLICHE ANWENDUNGEN**
MOBILE COMMUNICATIONS STATION, ESPECIALLY FOR APPLICATIONS IN AGRICULTURE, CONSTRUCTION AND FORESTRY
STATION DE COMMUNICATION MOBILE, NOTAMMENT POUR DES APPLICATIONS AGRICOLES, DU SECTEUR DU BÂTIMENT ET D'EXPLOITATION FORESTIÈRE

(30) Priorität: 01.03.2019 DE 102019202807
(43) Veröffentlichungstag der Anmeldung: 05.01.2022
(73) Patentinhaber: Deere & Company, Moline, IL 61265 (US)
(72) Erfinder: BOSCH, Johannes, 68163 Mannheim (DE); HUBER, Gerhard, 68163 Mannheim (DE); SCHIMPF, Jonas, 68163 Mannheim (DE); BRICKENSTEIN, Susanne, 68163 Mannheim (DE)
(74) Vertreter: Holst, Sönke
(86) Internationale Anmeldenummer: PCT/EP2020/055047
(87) Internationale Veröffentlichungsnummer: WO 2020/178103

(56) Entgegenhaltungen:
- EP-A1- 1 003 238
- WO-A1-2014/195981
- DE-A1- 19 513 251
- US-B2- 7 642 987

## Beschreibung

Die Erfindung betrifft eine mobile Kommunikationsstation mit einem tragenden Rahmengestell, an dem eine Antennenanordnung zur Kommunikation mit mobilen Endgeräten und Kommunikationsmittel zur Kommunikation mit einer beabstandeten Stelle angeordnet sind, wobei die Antennenanordnung und die Kommunikationsmittel zur Herstellung einer bidirektionalen Kommunikationsverbindung zwischen den mobilen Endgeräten und der beabstandeten Stelle vorgesehen sind und das tragende Gestell eine Schnittstelle zur mechanischen Kopplung mit einem Fahrzeug zum Transport der mobilen Kommunikationsstation umfasst.

### Stand der Technik

In der Land-, Bau- und Forstwirtschaft schreitet die Automatisierung von Maschinen ständig weiter voran. Zudem besteht für dort tätige Personen ein großer Bedarf an Informationen, um Entscheidungen hinsichtlich durchzuführender Arbeiten zu treffen. Diese Informationen können beispielsweise Daten hinsichtlich gewisser Eigenschaften von Sensoren betreffen, die zur Maschinensteuerung benötigt werden oder Korrekturdaten für satellitenbasierte Positionsbestimmungsempfänger oder beliebige Daten hinsichtlich von Eigenschaften eines Feldes oder Forsts, oder zu Kommunikations- oder Unterhaltungszwecken eines Nutzers eines Endgeräts dienen. Auch in der (Hoch- und Tief-) Bauwirtschaft werden moderne, digitalisierte Informationsmanagementsysteme verwendet, z.B. für so genannte Live-Tracking-Systeme. Da nicht in sämtlichen Fällen alle für eine Maschinensteuerung oder menschliche Entscheidung relevanten Daten lokal, d.h. auf einem Speichermittel einer Maschinensteuerung oder in einem mobilen Endgerät (z.B. Smartphone) verfügbar sind bzw. eine Übertragung von Daten an beabstandete Stellen vonnöten ist, besteht ein Bedarf daran, über drahtlose Verbindungen einen bidirektionalen Zugang zu Informationsquellen und/oder -senken zu erhalten, z.B. über das Internet. Unter anderem aus Kostengründen sind jedoch nicht alle land- oder forstwirtschaftlichen Flächen mit (Mobil-) Funknetzen beliebiger Art abgedeckt. Derzeit ist somit nicht an allen Stellen, wo es wünschenswert wäre, eine drahtlose Verbindung zwischen Maschinen oder Endgeräten und beabstandeten Stationen möglich, sei es über übliche Mobilfunkprotokolle oder unter Verwendung anderer Protokolle über beliebige Frequenzbänder, wie bspw. Frequenzen des sogenannten ISM-Bandes (Industrial, Scientific and Medical Band).

Im Stand der Technik wurden so genannte mobile Kommunikationsstationen oder-türme beschrieben, die ein auf vier zur Anpassung an die Geländekontur höhenverstellbaren Füßen stehendes, tragendes Gestell umfassen, an dem ein ausziehbarer Mast mit Antennen zur funkgestützten Verbindung mit Endgeräten und eine Satellitenantenne angebracht sind (WO 2007/136241 A1), um auch in ansonsten nicht erreichbaren Gebieten eine Kommunikation zwischen Endgeräten und beabstandeten Stellen zu ermöglichen. Eine ähnliche Kommunikationsstation zeigen die DE 195 13 251 A1 und die WO 2014/195891 A1, deren Transport auf der Ladefläche eines Lastwagens erfolgt und die im Transportzustand die Form und Abmessungen eines Containers hat. Zum Verfrachten werden die Füße ausgezogen und der Lastwagen unter die Kommunikationsstation verbracht. Die EP 1 003 238 A1 zeigt eine Kommunikationsstation, die ihrerseits mit Rädern versehen ist und als Anhänger gezogen werden kann, während die US 7 642 987 B2 einen Kommunikationsmast zur stationären Aufstellung zeigt, der auf einem Anhänger transportiert wird.

### Aufgabe

Während in der WO 2007/136241 A1 nicht genau beschrieben wird, wie die Kommunikationsstation transportiert werden soll, erfordert die Verladung gemäß WO 2014/195891 A1 mittels der höhenverstellbaren Füße auf dem Lastwagen. Derartige Fahrzeuge können zwar auf normalen Straßen fahren, aber nicht in allen Fällen in relativ unwegsamem Gelände, das land-, bau- oder forstwirtschaftlich genutzt wird. Die vorliegende Erfindung hat sich zum Ziel gesetzt, diesen Nachteil zu vermeiden oder zumindest zu vermindern.

### Lösung

Dieses Problem wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Eine mobile Kommunikationsstation ist mit einem tragenden Rahmengestell versehen, an dem eine Antennenanordnung für eine Kommunikation mit mobilen Endgeräten und Kommunikationsmittel für eine Kommunikation mit einer beabstandeten Stelle angeordnet sind. Die Antennenanordnung und die Kommunikationsmittel sind durch elektronische Komponenten untereinander verbunden, die eine Herstellung einer bidirektionalen Kommunikationsverbindung zwischen den mobilen Endgeräten und der beabstandeten Stelle bzw. einem der Kommunikationsstation zugeordneten Rechner ermöglichen. Das tragende Gestell weist eine Schnittstelle in Form von Befestigungspunkten zur Anbringung einer Dreipunktkupplung eines Ackerschleppers zum Transport der mobilen Kommunikationsstation auf.

Auf diese Weise besteht die Möglichkeit, die Kommunikationsstation durch den Ackerschlepper an bisher nicht oder nur schwer zugängliche Bereiche auf einem Feld, einer Baustelle, einer (tage-) bergbaulichen Betriebsstätte oder in einem Forst zu verbringen. Insbesondere bei Anbringung der Kommunikationsstation an einer vorderen Dreipunktkupplung des Ackerschleppers kann dieser an seiner rückwärtigen Schnittstelle gleichzeitig ein Arbeitsgerät für die durchzuführenden Arbeiten mitführen.

Die Befestigungspunkte können etwa mittig an einer Seite des Rahmengestells angeordnet sein, sodass eine unsymmetrische Belastung der Dreipunktkupplung vermieden wird.

Das Rahmengestell kann für den Transport der Kommunikationsstation mit seitlichen Abdeckungen und/oder oberen Abdeckungen abdeckbar sein. Die seitlichen Abdeckungen können mit einer Öffnung versehen sein, durch welche die Befestigungspunkte zugänglich sind, wobei die Öffnung zwischen getrennten Teilen der seitlichen Abdeckung oder durch einen Ausschnitt darin gebildet werden kann. Die Öffnung kann sich nur in engeren Bereichen um die einzelnen Befestigungspunkte erstrecken oder dem Umriss der Dreipunktkupplung entsprechen. Es wäre auch denkbar, dass die Befestigungspunkte der Mobilstation aus dem von ihr bzw. den Abdeckungen gebildeten Umriss nach außen ragen.

Das tragende Rahmengestell kann an Armen angebrachte Standplatten umfassen, die durch Linearaktoren zwischen einer eingefahrenen Transportposition und einer ausgefahrenen Bodeneingriffsposition beweglich sind. Diese Arme können durch die Linearaktoren um horizontale Achsen verschwenkt, wie in den Figuren gezeigt, oder längenverstellt (teleskopiert) werden. Die Linearaktoren können durch eine Steuerung im Sinne einer automatischen Nivellierung der Kommunikationsstation ansteuerbar sein.

Insbesondere kann jeder Ecke des Rahmengestells ein Arm, ein Linearaktor und eine Standplatte zugeordnet sein, die in der Transportposition innerhalb von Aussparungen des Rahmengestells bzw, der Abdeckungen angeordnet sind und nicht über die Kontur der Kommunikationsstation hinausragen.

Die Antennenanordnung kann an einem teleskopierbaren Mast befestigt sein, welcher durch einen fremdkraftbetätigten Aktor oder von Hand zwischen einer horizontalen Transportposition und einer vertikalen Betriebsstellung beweglich ist.

Die Kommunikationsmittel zur drahtlosen Kommunikation mit einer beabstandeten Stelle können eine Satellitenantenne umfassen, die zwischen einer horizontalen Transportposition und einer ausgefahrenen Betriebsposition beweglich und in der Transportposition durch eine Abdeckung abdeckbar ist.

An einem Mast der Antennenanordnung kann eine Antenne zum Empfang von Signalen eines satellitenbasierten Positionsbestimmungssystems angebracht sein, die zur Erzeugung von Korrektursignalen für Positionsbestimmungssysteme dient, die über die Antennenanordnung zu den Endgeräten übersandt werden können.

### Ausführungsbeispiel

In den Zeichnungen ist ein nachfolgend näher beschriebenes Ausführungsbeispiel der Erfindung dargestellt. Es zeigen:
- Fig. 1: einen landwirtschaftlichen Ackerschlepper beim Transport einer mobilen Kommunikationsstation,
- Fig. 2: eine perspektivische Ansicht der Kommunikationsstation in Transportkonfiguration,
- Fig. 3: eine Ansicht der Kommunikationsstation mit abgenommenen Abdeckungen, und
- Fig. 4: eine Ansicht der Kommunikationsstation im (bis auf den eingefahrenen Mast) betriebsbereiten Zustand.

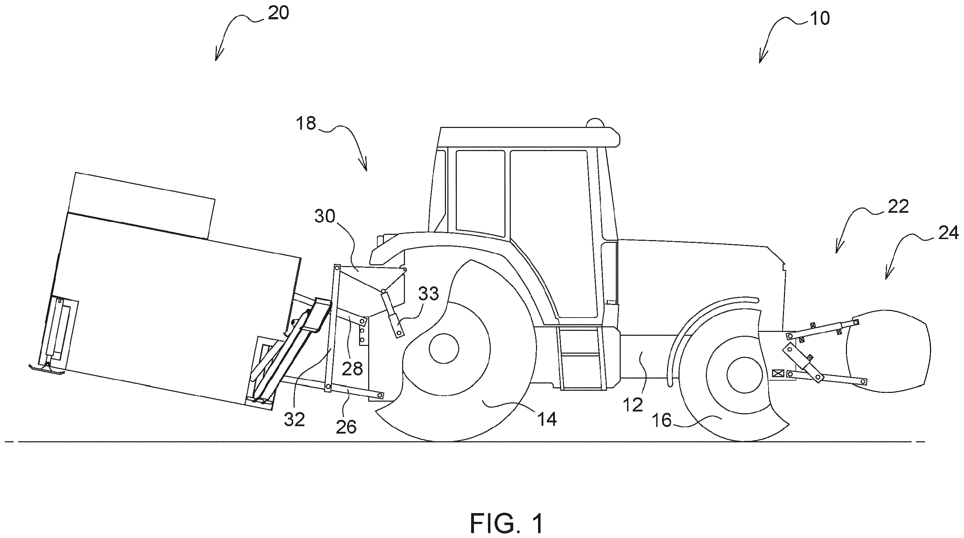

Die Figur 1 zeigt einen an sich bekannten Ackerschlepper 10, der sich auf einem tragenden Gestell 12 aufbaut und durch antreibbare, hintere Räder 14 und lenkbare, vordere Räder 16 auf dem Erdboden abstützt. Der Ackerschlepper 10 umfasst eine rückwärtige Dreipunktkupplung 18, die zwei seitlich nebeneinander angeordnete Unterlenker 26 und einen darüber angeordneten Oberlenker 28 aufweist. Die Unterlenker 26 sind über einen Kraftheber mit einem Hydraulikzylinder 33, der über eine sich am Gestell 12 abstützende Hebelanordnung 30 mit Hubarmen 32 verbunden ist, höhenverstellbar. An einer ebenfalls mit höhenverstellbaren Unterlenkern ausgestatteten, vorderen Dreipunktkupplung 22 ist ein Frontgewicht 24 angebracht.

Eine mobile Kommunikationsstation 20 ist an der rückwärtigen Dreipunktkupplung 18 angeschlossen. Sie stützt sich lediglich am Ackerschlepper 10 ab, nicht auf ihr zugeordneten Rädern, obwohl solche auch denkbar wären. Man könnte die Kommunikationsstation 20 auch an der vorderen Dreipunktkupplung 22 anbringen, um mit der rückwärtigen Dreipunktkupplung 18 oder einer anderen Schnittstelle an der Rückseite des Ackerschleppers 10 ein Arbeitsgerät zu transportieren.

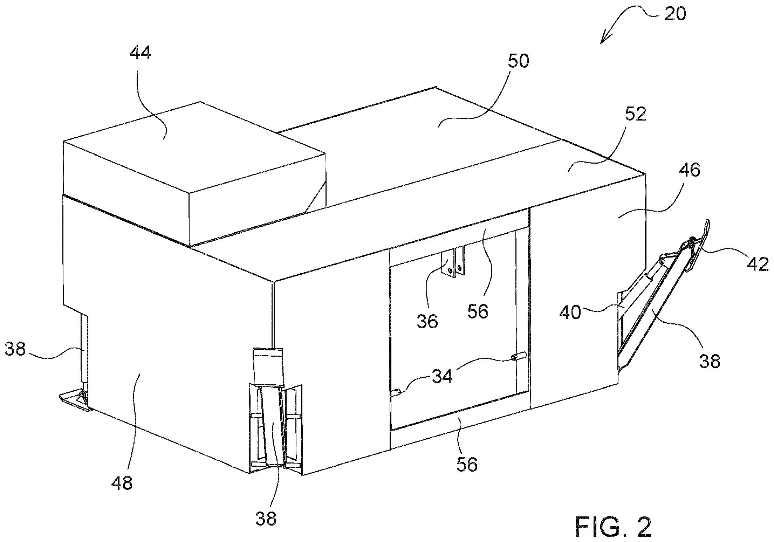

Die Kommunikationsstation 20 wird in der Figur 2 in ihrer Transportkonfiguration dargestellt. Die Kommunikationsstation 20 umfasst ein tragendes Rahmengestell 56, das durch seitliche Abdeckungen 46, 48 zu allen Seiten hin und durch obere Abdeckungen 44, 50 nach oben hin abgedeckt ist, obwohl es auch denkbar wäre, einige Teile, wie den Mast 60 und/oder die Satellitenantenne 58 teilweise oder ganz unbedeckt zu lassen. An der in Figur 2 vorn gezeigten Seite sind die seitlichen Abdeckungen 46 mit einer mittigen Öffnung versehen, durch die am Rahmengestell 56 angebrachte Befestigungspunkte 34 und 36 zugänglich sind. Beim Transport der Kommunikationsstation 20 werden der Oberlenker 28 der Dreipunktkupplung 18 an dem oberen Befestigungspunkt 36, der an einer horizontalen Querstrebe des Rahmengestells 56 angebracht ist und die Unterlenker 26 der Dreipunktkupplung 18 an den unteren Befestigungspunkten 34, die an vertikalen Streben des Rahmengestells 56 angebracht sind, lösbar angekoppelt. Dadurch wird es möglich, die Kommunikationsstation 20 mit dem Ackerschlepper 10 an beliebige Punkte auf einem Feld oder Forst zu verbringen, die mit einem Lastwagen nicht oder nur schwer erreichbar sind. Zudem kann, insbesondere bei Anbringung der Kommunikationsstation 20 an der vorderen Dreipunktkupplung 22, ein Arbeitsgerät mit dem Ackerschlepper 10 transportiert werden. Die Kommunikationsstation 20 kann demnach zu Arbeitseinsätzen des Ackerschleppers 10 oder einer anderen Maschine in schwer zugänglichem Gelände mitgenommen werden. Es wäre auch möglich, noch andere Schnittstellen für Transportfahrzeuge am tragenden Gestell 56 vorzusehen, z.B. für die Gabel eines Gabelstaplers oder Radladers. Zusätzlich kann es natürlich auch auf Anhängern verladen bzw. luftgestützt transportiert werden.

Die Kommunikationsstation 20 ist an ihren vier Ecken mit jeweils einem Fuß ausgestattet, der sich aus einem Arm 38 und einer an dessen äußerem Ende durch Kugelgelenke angebrachten Standplatte 42 aufbaut. Die Arme 38 sind um horizontale, sich vorzugsweise in einem Winkel von 45° gegenüber den der jeweiligen Ecke benachbarten Seiten abgewinkelte Drehachsen am Rahmengestell 56 angelenkt. Eine Verstellung der Arme 38 erfolgt durch hydraulisch oder elektrisch betriebene Linearaktoren 40. Sie ermöglichen es, die Arme 38 zwischen einer Transportposition, in der sie sich nach oben erstrecken und in entsprechenden Aussparungen im Rahmengestell 56 befinden und nicht über die verbleibende Außenkontur der Kommunikationsstation 20 nach außen ragen, wie in der Figur 2 anhand der links eingezeichneten Arme 38 dargestellt, und einer ausgefahrenen Betriebsstellung zu bewegen, in der die Standplatten 42 sich auf dem Erdboden abstützen (in den Figuren 1 bis 3 ragt der rechts eingezeichnete Arm 38 nur zu Illustrationszwecken nach außen; in Realität wäre er, wie die anderen Arme 38, in die Transportstellung nach oben und innen eingezogen). Einige oder alle der Arme 38 könnten, anstelle verschwenkbar zu sein, durch die Linearaktoren 40 lediglich in vertikaler Richtung verstellt (z.B. teleskopiert) werden.

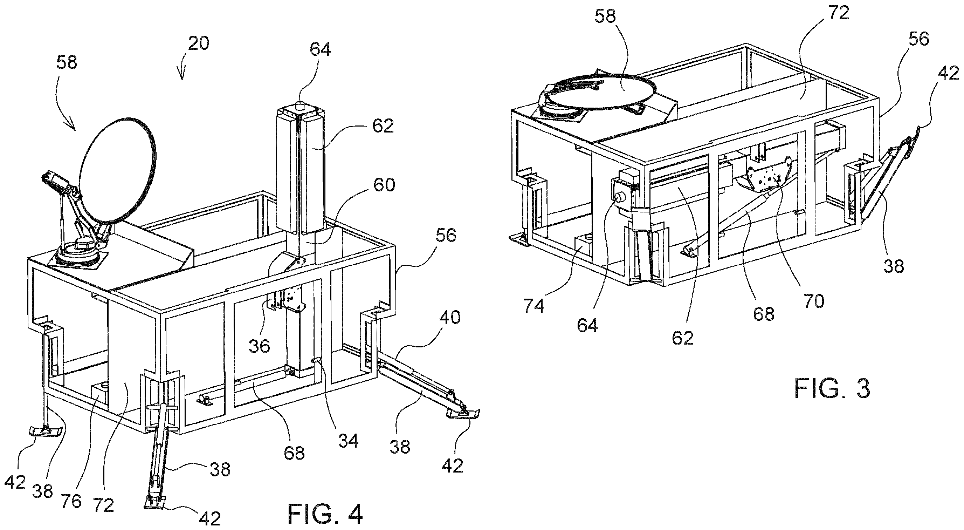

Eine automatische Steuerung, die Bestandteil elektrischer Komponenten 74 (s. Figur 4) der Kommunikationsstation 20 sein kann, kann eingerichtet sein, die Linearaktoren 40 im Sinne einer automatischen Nivellierung der Kommunikationsstation 20 anzusteuern, um diese selbsttätig horizontal auszurichten. Dabei könnte zum Aufbau der Kommunikationsstation 20 eine erste Grobausrichtung durch die positionsverstellbare Dreipunktkupplung 18 oder 22 erfolgen, worauf die Linearaktoren 40 die Standplatten 42 in Bodeneingriff bringen. Die Dreipunktkupplung 18 oder 22 wird dann von dem Rahmengestell 56 getrennt (oder sie wird hydraulisch in eine Schwimmstellung geschaltet) und die Linearaktoren 40 durch die automatische Steuerung die Kommunikationsstation 20 letztendlich genau horizontal ausrichten, und die Dreipunktkupplung 18 oder 22 wird, sofern noch nicht geschehen, vom Rahmengestell 56 gelöst. Das Wiederanbringen am Ackerschlepper 10 zum Abtransport erfolgt in umgekehrter Reihenfolge.

Die Abdeckungen 46 bis 50 werden für den Betrieb der Kommunikationsstation 20 komplett oder teilweise abgenommen oder abgeklappt, wie in den Figuren 2 bis 4 dargestellt, was von Hand oder automatisch mittels geeigneter Aktoren (nicht gezeigt) erfolgen kann. Sie können an der Innenseite des Rahmengestells 56 verstaut werden, z.B. in einem Hohlraum zwischen dem tragenden Gestell und einer in der Figur 4 dargestellten Trennwand 72 des Rahmengestells 56. Die Abdeckung 44 muss nicht gegenüber der übrigen oberen Abdeckung 50 erhöht sein, sondern könnte plan damit liegen (bzw. damit einteilig sein) oder ihr gegenüber vertieft sein.

Zur drahtlosen elektromagnetischen Kommunikation mit Endgeräten umfasst die Kommunikationsstation 20 eine Antennenanordnung 62, die an einem teleskopier- und verschwenkbaren Mast 60 angebracht ist. Die Antennenanordnung 62 kann, anstelle der gezeigten üblichen Form, auch als Rundstrahl, Aufsteck- oder z.B. Klebeantennen beliebiger Form ausgeführt sein. Der Mast 60 ist durch einen elektrischen oder hydraulischen Linearaktor 68 (oder mittels eines manuellen Antriebs, nicht gezeigt) zwischen einer horizontalen Verstauposition (s. Figur 3) und einer vertikalen Betriebsposition (Figur 4) um eine horizontale Achse 70 verschwenkbar. In der vertikalen Betriebsposition ist der Mast 60 zudem aus der in Figur 4 gezeigten, eingezogenen Position durch einen weiteren, nicht gezeigten Linearaktor (oder von Hand mittels eines geeigneten Antriebs) noch in eine ausgezogene Position teleskopierbar, um die Antennenanordnung 62 in eine hinreichende Höhe zur Bereitstellung einer hinreichenden Reichweite der Kommunikation mit den Endgeräten zu verbringen. An der Spitze des Masts 60 ist zudem eine Antenne 64 zum Empfang von Signalen eines satellitenbasierten Positionsbestimmungssystems (GPS, Glonass, Galileo o.ä.) angebracht. Sie dient, nach einem Einmessen, zur Erzeugung von Korrektursignalen für Positionsbestimmungssysteme ("RTK", real time kinematics), die über die Antennenanordnung zu den Endgeräten übersandt werden können. Über die Antennenanordnung 62 können Signale nach beliebigen Protokollen abgestrahlt und empfangen werden, z.B. für Mobilfunk (GSM, EDGE, UMTS, HSPDA, LTE, 5G etc.) oder WLAN- oder andere Protokolle bzw. Übertragungstechnologien (Bluetooth, Zigbee etc.).

Darüber hinaus können am Mast 60 technische Einrichtungen zum Betrieb, wie Positionslichter und Windmesser angebracht sein. Einige der Sende- und Empfangseinheiten könnten alternativ auch an niedrigeren Positionen des Mastes 60 oder auf dem Grundkörper der Kommunikationsstation 20 angebracht werden. Im Falle zu hoher Windlast oder bei Unwetter kann der Mast 60 und/oder die Satellitenantenne 58 eigenständig in einen sicheren Zustand zurückfahren. Der Mast 60 kann bei größerer Höhe oder zur Erreichung höherer Standfestigkeit bei größerer Windlast mit einer Abspannung (bspw. Seile) versehen werden. Anstelle eines Masts 60 könnte auch ein kabelgebundenes Fluggerät zum Einsatz kommen (vgl. DE 10 2010 003 866 A1 und DE 10 2014 201 203 A1); die Sende- und Empfangseinrichtungen werden in diesem Fall von dem Fluggerät (Kabelkopter) getragen, der über ein Kabel mit Daten- und Stromanbindung versorgt wird. Der Kabelkopter kann aus der dem Innenraum der Kommunikationsstation 20 starten bzw. darin wieder landen bevor diese transportiert wird.

Zur Herstellung einer Kommunikationsverbindung ("backbone") mit einer beabstandeten Stelle, z.B. einem (Internet-) Server dient eine Satellitenantenne 58, die in der Transportposition, in der sie flach liegt (s. Figur 3) durch die kastenförmige Abdeckung 44 nach oben abgedeckt wird (s. Figur 2). Nach (insbesondere manuellem) Abnehmen der Abdeckung 44 wird die Satellitenantenne 58 durch einen selbsttätigen Mechanismus aufgerichtet (s. Figur 4) und auf einen geeigneten, geostationären oder sich bewegenden Kommunikationssatelliten ausgerichtet. Über diesen wird letztendlich die Kommunikation zwischen den Endgeräten und der beabstandeten Station hergestellt. Bei einer anderen Ausführungsform könnte anstelle der Satellitenantenne 58 oder zusätzlich dazu eine am Mast 62 angebrachte Antenne für eine Richtfunkverbindung z.B. im Mikrowellenbereich oder eine optische Kommunikationsstrecke treten, oder falls verfügbar, ein Anschluss an ein Glasfaser- oder anderes fest verlegtes Kommunikationsnetzwerk, ggf. unter Verwendung eines Verbindungskabels hinreichender Länge.

Die elektrischen bzw. elektronischen Funktionen der Kommunikationsstation 20 werden durch die elektrischen Komponenten 74 bereitgestellt. Die Stromversorgung der Kommunikationsstation kann durch Batterien, die durch Solarzellen und/oder Windturbinen gestützt werden können, durch motorisch angetriebene Generatoren oder Brennstoffzellen oder durch Verbindung mit vorhandenen Stromnetzen erfolgen.

Die dargestellte Erfindung betrifft nach alledem eine mobile, semistationäre, transportable, autark, also funknetzunabhängig zu betreibende Kommunikationsstation 20 zur Versorgung des Umfeldes mit Telemetriediensten, öffentlichem oder privatem Mobilfunk, wie auch weiteren funk- bzw. konnektivitätsbasierten Übertragungs- (Broadcast-) oder Datendiensten. Sie kommt insbesondere dort zum Einsatz, wo eine Funkabdeckung mit beispielsweise öffentlichem Mobilfunk auf Grund mangelnder Flächenversorgung staatlicher oder öffentlicher Netzanbieter oder topografischer Besonderheiten nicht oder nur eingeschränkt verfügbar ist. Somit kann die mobile Kommunikationsstation 20 Versorgungslücken schließen und Datendienste bzw. SmartServices, wie Fernanzeige von Anzeigeeinrichtungen (Remote Display Access) oder vorsorgende Wartung (Predictive Maintenance), die eine latenzarme wie auch hoch bandbreitige Verbindung benötigen, ermöglichen. Auch ein Betreiben sicherheitskritischer Infrastruktur, wie autonomes Fahren oder Betreiben von Arbeitsmaschinen und -verbünden, wie selbsttätiges Parallelfahren von Maschinen, unterstützt durch drahtlose Kommunikation, wird dadurch nahezu ausfallsicher ermöglicht. Durch die Integration eines EdgeCloudServers (besteht aus einem Industrierechner mit Speicher und Prozessor bzw. Recheneinheit hoher Leistungsfähigkeit, der sowohl Aufgaben der Netzwerk-Verwaltung ausführt, als auch Applikationen hostet und Operationen der Künstlichen Intelligenz oder des Machine Learnings ausführen kann) in die Kommunikationsstation 20, kann aber das interne LTE/5G-Netz auch ohne Internetanbindung als privates Mobilfunknetz seine Funktionsfähigkeit aufrechterhalten und alle Dienste, die auf der Rechner/Server-Ebene der EdgeCloud laufen, den Nutzern anbieten. Die Nutzer werden durch SIM oder ESIM in ihren Endgeräten (Mobiltelefon, Notebook oder Fahrzeuge) oder andere geeignete Identifizierungsverfahren wie Gerätenummern oder Hardwareadressen identifiziert. Roaming ist technisch möglich.

Darüber hinaus kann die Kommunikationsstation 20 als Referenzstation für GNSS-Korrekturen dienen. In Bereichen, in denen das übliche RTK-Radiosignal über die freien Frequenzbänder nicht empfangen werden kann bzw. auch kein MRTK über Mobilfunk (wie LTE) empfangen werden kann, besteht die Möglichkeit, ein solches Korrektursignal bereitzustellen und ermöglicht den Einsatz RTK-basierter Anwendungen mit höchster Präzision. Auch eine Übermittlung von (mittels der Antenne 64 erzeugten und/oder über die Satellitenantenne 58 von einer beabstandeten Stelle empfangenen) Korrektursignalen über Internetprotokoll ist möglich.

Die Antennenanordnung 62 für LTE kann in Form von Rundstrahlantennen, einer bis mehreren Sektorantennen oder auch gerichteten Antennen verschiedenster Frequenzbänder bestehen, die Empfangseinheiten ebenfalls aus gerichteten Antennen oder Richtfunkantennen in verschiedenen Frequenzspektren (5G/LTE, Millimeterwelle bzw. Frequenzen bis zu 26 GHz) und Sendeleistungen. Die Kommunikationsstation 20 kann darüber hinaus Einheiten zum Empfang von LoRa-WAN (LongRange-WideAreaNetwork), Sigfox, Zigbee, Bluetooth und vergleichbaren Protokollen bzw. Übertragungstechnologien enthalten. Darüber können Sensoren von Maschinen oder Infrastruktur, die Daten wie Füllstände, Bewegung oder Lage erfassen in ein Netzwerk eingebunden werden bzw. Cloudanwendungen zugänglich gemacht werden. Somit könnten beispielsweise Logistikprozesse gesteuert werden. LoRA-WAN und die anderen erwähnten Technologien wie Sigfox oder Bluetooth sind mögliche Technologien, um Internet of Things Devices miteinander zu vernetzen.

Einsatzgebiete sind unter anderem die Land- und Forstwirtschaft, insbesondere um Applikationen, die Vernetzung und Internetverbindung bzw. Rechenleistung oder Kl-Funktionalitäten benötigen, vollumfänglich auch in Gegenden mit keiner oder schlechter Netzabdeckung zu betreiben. Mögliches Einsatzpotential bietet daneben die Bauindustrie, Bergbauunternehmen, Regierungs- wie auch Nichtregierungsorganisationen (NGOs) und SAR-Einheiten (Rettungs- und Katastrophenschutz), wie Zivilschutz, technisches Hilfswerk (THW) oder Feuerwehr. Insbesondere die Bauindustrie, wie Straßen- und Bahnwegebau, aber auch Tagebaubetriebe benötigen neben reinen Telekommunikationsdiensten zur Positionierung ihrer Fahrzeuge und Vermessung der Arbeiten bzw. Bauwerke höchst präzise GPS Systeme. Dazu kann das beschriebene System an allen Orten der Welt empfangbare Referenzsignale für das angrenzende Umfeld senden. Alle Regionen die nicht über eine ausreichende Mobilfunkabdeckung verfügen, sind typische Einsatzgebiete der Erfindung. Ebenfalls Regionen in den bestehende Infrastruktur zerstört wurde oder überlastet ist, kann als Einsatzgebiet in Frage kommen (Erdbebengebiet, Großveranstaltungen, Flüchtlingslager, humanitäre Einsätze).

## Patentansprüche

1. Mobile Kommunikationsstation (20), mit einem tragenden Rahmengestell (56), an dem eine Antennenanordnung (62) zur Kommunikation mit mobilen Endgeräten und Kommunikationsmittel zur Kommunikation mit einer beabstandeten Stelle angeordnet sind, wobei die Antennenanordnung (62) und die Kommunikationsmittel zur Herstellung einer bidirektionalen Kommunikationsverbindung zwischen den mobilen Endgeräten und der beabstandeten Stelle vorgesehen sind und das tragende Rahmengestell (56) eine Schnittstelle zur mechanischen Kopplung mit einem Fahrzeug zum Transport der mobilen Kommunikationsstation (20) umfasst, **dadurch gekennzeichnet, dass** die Schnittstelle Befestigungspunkte (34, 36) zur Anbringung einer Dreipunktkupplung (18, 22) eines Ackerschleppers (10) umfasst.

2. Kommunikationsstation (20) nach Anspruch 1, wobei die Befestigungspunkte (34, 36) etwa mittig an einer Seite des Rahmengestells (56) angeordnet sind.

3. Kommunikationsstation (20) nach Anspruch 1 oder 2, wobei das Rahmengestell (56) zum Transport der Kommunikationsstation (20) mit seitlichen Abdeckungen (46, 48) und/oder oberen Abdeckungen (44, 50) abdeckbar ist.

4. Kommunikationsstation (20) nach Anspruch 3, wobei die seitlichen Abdeckungen (46) mit einer Öffnung versehen sind, durch welche die Befestigungspunkte (34, 36) zugänglich sind.

5. Kommunikationsstation (20) nach einem der Ansprüche 1 bis 4, wobei das tragende Rahmengestell (56) an Armen (38) angebrachte Standplatten (42) umfasst, die durch Linearaktoren (40) zwischen einer eingefahrenen Transportposition und einer ausgefahrenen Bodeneingriffsposition beweglich sind.

6. Kommunikationsstation (20) nach Anspruch 5, wobei die Linearaktoren (40) durch eine Steuerung im Sinne einer automatischen Nivellierung der Kommunikationsstation (20) ansteuerbar sind.

7. Kommunikationsstation (20) nach Anspruch 5 oder 6, wobei jeder Ecke des Rahmengestells (56) ein Arm (38), ein Linearaktor (40) und eine Standplatte (42) zugeordnet sind, die in der Transportposition innerhalb von Aussparungen des Rahmengestells (56) bzw, der Abdeckungen (44-50) angeordnet sind und nicht über die Kontur der Kommunikationsstation (20) hinausragen.

8. Kommunikationsstation (20) nach einem der vorhergehenden Ansprüche, wobei die Antennenanordnung (62) an einem teleskopierbaren Mast (60) befestigt ist, welcher durch einen fremdkraftbetätigten Aktor (68) oder von Hand zwischen einer horizontalen Transportposition und einer vertikalen Betriebsstellung beweglich ist.

9. Kommunikationsstation (20) nach einem der vorhergehenden Ansprüche, wobei die Kommunikationsmittel eine Satellitenantenne (58) umfassen, die zwischen einer horizontalen Transportposition und einer ausgefahrenen Betriebsposition beweglich und in der Transportposition durch eine Abdeckung (44) abdeckbar ist.

10. Kommunikationsstation (20) nach einem der vorhergehenden Ansprüche, wobei an einem Mast (60) der Antennenanordnung (62) eine Antenne (64) zum Empfang von Signalen eines satellitenbasierten Positionsbestimmungssystems angebracht ist, die zur Erzeugung von Korrektursignalen für Positionsbestimmungssysteme dient, die über die Antennenanordnung (62) zu den Endgeräten übersandt werden können.

11. Kommunikationsstation (20) nach einem der vorhergehenden Ansprüche, in welche ein EdgeCloudServer integriert ist, der es ermöglicht, ohne Internetanbindung als privates Mobilfunknetz Dienste, die auf der Rechner/Server-Ebene der EdgeCloud laufen, für Endgeräte anzubieten, wobei der EdgeCloudServer aus einem Industrierechner mit Speicher und Prozessor bzw. Recheneinheit hoher Leistungsfähigkeit besteht, der sowohl Aufgaben der Netzwerk-Verwaltung ausführt, als auch Applikationen hostet und Operationen der Künstlichen Intelligenz oder des Machine Learnings ausführen kann.

## Claims

1. Mobile communications station (20), with a supporting frame (56), on which an antenna array (62) for communication with mobile devices and communication means for communication with a distant location are arranged, wherein the antenna array (62) and the communication means are intended for establishing a bidirectional communication link between the mobile devices and the distant location and the supporting frame (56) comprises an interface for mechanical coupling to a vehicle for transporting the mobile communications station (20), **characterized in that** the interface comprises fastening points (34, 36) for the attachment of a three-point hitch (18, 22) of a farm tractor (10).

2. Communications station (20) according to Claim 1, wherein the fastening points (34, 36) are arranged about midway along a side of the frame (56).

3. Communications station (20) according to Claim 1 or 2, wherein, for transporting the communications station (20), the frame (56) can be covered with lateral coverings (46, 48) and/or upper coverings (44, 50).

4. Communications station (20) according to Claim 3, wherein the lateral coverings (46) are provided with an opening, through which the fastening points (34, 36) are accessible.

5. Communications station (20) according to one of Claims 1 to 4, wherein the supporting frame (56) comprises standing plates (42), which are attached to arms (38) and can be moved by linear actuators (40) between a retracted transporting position and an extended ground-engaging position.

6. Communications station (20) according to Claim 5, wherein the linear actuators (40) can be activated by a controller for the purpose of automatic levelling of the communications station (20).

7. Communications station (20) according to Claim 5 or 6, wherein each corner of the frame (56) is assigned an arm (38), a linear actuator (40) and a standing plate (42), which in the transporting position are arranged within recesses of the frame (56) or of the coverings (44-50) and do not protrude beyond the contour of the communications station (20).

8. Communications station (20) according to one of the preceding claims, wherein the antenna array (62) is fastened to a telescopic mast (60), which can be moved by a power-operated actuator (68) or manually between a horizontal transporting position and a vertical operating position.

9. Communications station (20) according to one of the preceding claims, wherein the communication means comprise a satellite antenna (58), which can be moved between a horizontal transporting position and an extended operating position and in the transporting position can be covered by a covering (44).

10. Communications station (20) according to one of the preceding claims, wherein attached to a mast (60) of the antenna array (62) is an antenna (64) for receiving signals of a satellite-based location-determining system, which serves for generating correction signals for location-determining systems, which can be sent via the antenna array (62) to the mobile devices.

11. Communications station (20) according to one of the preceding claims, in which an edge cloud server is integrated that makes it possible to offer to mobile devices, without an Internet connection, as a private cellular mobile telephone network, services which run on the computer/server level of the edge cloud, wherein the edge cloud server consists of an industrial computer with a memory and a processor or a powerful computing unit that not only performs tasks of network management but also hosts applications and can perform artificial intelligence or machine learning operations.

## Revendications

1. Station de communication mobile (20), comportant un bâti porteur (56) sur lequel sont disposés un agencement d'antennes (62) servant à la communication avec des terminaux mobiles et des moyens de communication servant à la communication avec un lieu distant, dans lequel l'agencement d'antennes (62) et les moyens de communication sont conçus pour établir une liaison de communication bidirectionnelle entre les terminaux mobiles et le lieu distant, et le bâti porteur (56) comprend une interface servant au couplage mécanique avec un véhicule pour le transport de la station de communication mobile (20),
**caractérisée en ce que** l'interface comprend des points de fixation (34, 36) servant au montage d'un attelage à trois points (18, 22) d'un tracteur agricole (10).

2. Station de communication (20) selon la revendication 1, dans laquelle les points de fixation (34, 36) sont disposés sensiblement au centre d'un côté du bâti (56).

3. Station de communication (20) selon la revendication 1 ou 2, dans laquelle le bâti (56) peut être recouvert de capots latéraux (46, 48) et/ou de capots supérieurs (44, 50) pour le transport de la station de communication (20) .

4. Station de communication (20) selon la revendication 3, dans laquelle les capots latéraux (46) sont pourvus d'une ouverture à travers laquelle il est possible d'accéder aux points de fixation (34, 36).

5. Station de communication (20) selon l'une quelconque des revendications 1 à 4, dans laquelle le bâti porteur (56) comprend des plaques d'appui (42) montées sur des bras (38) et déplaçables par des actionneurs linéaires (40) entre une position de transport rétractée et une position d'emprise au sol déployée.

6. Station de communication (20) selon la revendication 5, dans laquelle les actionneurs linéaires (40) peuvent être commandés par un dispositif de commande dans le sens d'un nivellement automatique de la station de communication (20).

7. Station de communication (20) selon la revendication 5 ou 6, dans laquelle, à chaque angle du bâti (56) sont associés un bras (38), un actionneur linéaire (40) et une plaque de support (42) qui, en position de transport, sont disposés à l'intérieur d'évidements du bâti (56) ou des capots (44-50) et ne dépassent pas du contour de la station de communication (20).

8. Station de communication (20) selon l'une quelconque des revendications précédentes, dans laquelle l'agencement d'antennes (62) est fixé à un mât télescopique (60) qui peut être déplacé entre une position de transport horizontale et une position de fonctionnement verticale par un actionneur à commande externe (68) ou manuellement.

9. Station de communication (20) selon l'une quelconque des revendications précédentes, dans laquelle les moyens de communication comprennent une antenne satellite (58) mobile entre une position de transport horizontale et une position de fonctionnement déployée, et pouvant être recouverte par un capot (44) dans la position de transport.

10. Station de communication (20) selon l'une quelconque des revendications précédentes, dans laquelle une antenne (64) est montée sur un mât (60) de l'agencement d'antennes (62) pour recevoir des signaux d'un système de détermination de position par satellite, qui sert à générer des signaux de correction destinés à des systèmes de détermination de position, lesquels signaux peuvent être retransmis aux terminaux par l'intermédiaire de l'agencement d'antennes (62).

11. Station de communication (20) selon l'une quelconque des revendications précédentes, dans laquelle est intégré un serveur EdgeCloud qui permet, sans connexion Internet, de proposer aux terminaux, en tant que réseau mobile privé, des services qui sont exécutés au niveau ordinateur/serveur de l'EdgeCloud, le serveur EdgeCloud étant constitué d'un ordinateur industriel doté d'une mémoire et d'un processeur ou d'une unité informatique à haute performance, qui peut aussi bien mémoriser des tâches de gestion de réseau qu'héberger des applications et mettre en œuvre des opérations d'intelligence artificielle ou d'apprentissage automatique.
